# EUROPÄISCHE PATENTSCHRIFT

(11) **EP 1 958 309 B1**
(45) Veröffentlichungstag und Bekanntmachung des Hinweises auf die Patenterteilung: **20.03.2013**
(21) Anmeldenummer: 05820783.8
(22) Anmeldetag: 07.12.2005
(51) Int. Cl.: H02J 3/18

(54) **ELEKTROENERGIEÜBERTRAGUNGSEINRICHTUNG**
ELECTRICAL ENERGY TRANSMISSION DEVICE
DISPOSITIF DE TRANSMISSION D'ENERGIE ELECTRIQUE

(43) Veröffentlichungstag der Anmeldung: 20.08.2008
(73) Patentinhaber: Siemens Aktiengesellschaft, 80333 München (DE)
(72) Erfinder: HEROLD, Gerhard, 91056 Erlangen (DE); KIRSCHNER, Lutz, 91074 Herzogenaurach (DE); KOCH, Hermann, 91466 Gerhardshofen (DE); RETZMANN, Dietmar, 91315 Höchstadt (DE)
(86) Internationale Anmeldenummer: PCT/DE2005/002222
(87) Internationale Veröffentlichungsnummer: WO 2007/065383

(56) Entgegenhaltungen:
- DE-A1- 19 937 661
- DE-A1-102004 040 247
- DE-C1- 19 737 590
- US-A- 5 032 738
- KASZTENNY B ET AL: "VSI-BASED SERIES COMPENSATION SCHEME FOR TRANSMISSION LINES" EUROPEAN TRANSACTIONS ON ELECTRICAL POWER ENGINEERING, VDE VERLAG, DE, Bd. 9, Nr. 2, März 1999 (1999-03), Seiten 101-108, XP001147299 ISSN: 0939-3072

## Beschreibung

Die Erfindung betrifft eine Elektroenergieübertragungseinrichtung mit Wechselstrom führenden und eine Übertragungsimpedanz aufweisenden Phasenleitern und Mantelleitern, die mit den Phasenleitern induktiv gekoppelt sind, wobei ein erstes Ende und ein zweites Ende jedes Mantelleiters mit einem Widerstand einen Mantelstromkreis ausbilden und eine elektronische Baugruppe zur Änderung der Impedanz des Mantelstromkreises vorgesehen ist, die elektronische Baugruppe auch zur Erhöhung der Übertragungsimpedanz eingerichtet ist.

Im Rahmen der Energieverteilung werden Kabel oder gasisolierte Leitungen (GIL) verwendet, um große Energiemengen zwischen verschiedenen Energienetzen zu übertragen. Die GIL besteht aus Phasenleitern, welche sich in rohrförmigen und gasisolierten Mantelleitern erstrecken, und bietet aufgrund ihrer niedrigen Übertragungsimpedanz die Möglichkeit, Leistungen von mehreren 1000 MW verlustarm zu übertragen. Trotz dieser niedrigen Übertragungsimpedanz kann aber beispielsweise die Verteilung von Energieströmen zwischen Energienetzen bei der Integration von solchen GIL in unerwünschter Weise beeinflusst werden.

Aus der DE 199 37 661 A1 ist eine gattungsgemäße Schaltungsanordnung für ein Drehstromübertragungssystem bekannt, bei dem für jeden Phasenleiter ein Mantelleiter vorhanden ist. Dem Mantelleiter in Reihe geschaltet wird ein kapazitiver Widerstand, der dazu dient, die Längsimpedanz des Phasenleiters zu kompensieren. Durch eine derartige Kompensation wird die Blindleistung des Übertragungssystems herabgesetzt oder minimiert.

Des Weiteren wird in der DE 199 37 661 A1 vorgeschlagen, in Abhängigkeit von der Last des Übertragungssystems mehrere Kondensatoren zu- oder abzuschalten. Nachteilig bei dieser Schaltungsanordnung ist, dass lediglich eine Impedanzerniedrigung zur Blindleistungskompensation möglich ist.

Der Erfindung liegt daher die Aufgabe zugrunde, eine Elektroenergieübertragungseinrichtung der eingangs genannten Art auszubilden, die bei unterschiedlichen Anforderungen an die Energieübertragung flexibel einsetzbar ist.

Erfindungsgemäß gelöst wird diese Aufgabe dadurch, dass der Widerstand ein Blindwiderstand ist, die elektronische Baugruppe den Blindwiderstand umfasst, und eine Primärseite eines Transformators mit dem Phasenleiter verbunden ist und die Sekundärseite des Transformators mit der elektronischen Baugruppe verbunden ist.

Durch das Erhöhen der Übertragungsimpedanz kann das Übertragungsverhalten der Gesamtanordnung beeinflusst werden. Dies ist vorteilhaft, wenn beispielsweise eine Elektroenergieübertragungseinrichtung verwendet wird, um verschiedene Hochspannungsnetze miteinander zu verbinden. Bei einer derartigen Verbindung verschiedener Netze kann es sein, dass zu bestimmten Zeiten nur eine geringe Übertragungsleistung erforderlich ist. In einem solchen Fall muss die Leitungsimpedanz der Elektroenergieübertragungseinrichtung vergrößert werden können. Durch eine elektronische Baugruppe, die auch zur Erhöhung der Übertragungsimpedanz eingerichtet ist, ist eine Änderung und Steuerung der Übertragungsimpedanz der Elektroenergieübertragungseinrichtung abhängig von derartig veränderten Übertragungsanforderungen möglich. Ferner wird durch eine solche Anordnung ein deutlich verbessertes Dämpfungsverhalten bei im Netz auftretenden Pendelungen erreicht. Solche Pendelungen können beispielsweise in einem Verbundnetz bei Störungen von an das Verbundnetz angeschlossenen Energieerzeugungsanlagen auftreten und führen zu Schwankungen des übertragenen Lastflusses. Derartige Pendelungen können durch die erfindungsgemäße Anordnung wirksam gedämpft werden, so dass das Übertragungsverhalten insgesamt deutlich verbessert wird. Vorteilhaft bei einer solchen Anordnung ist, dass kein weiterer Blindwiderstand im Mantelstromkreis angeordnet sein muss, da über die mit dem Blindwiderstand zusammenwirkende elektronische Baugruppe die Steuerung der Übertragungsimpedanz der Elektroenergieübertragungseinrichtung möglich ist. Als Blindwiderstand kann eine Spule oder ein Kondensator oder eine Kombination von Spulen und Kondensatoren vorgesehen sein. Durch die Verbindung des Transformators mit dem Phasenleiter kann direkt aus dem Phasenleiter eine Wechselspannung abgegriffen werden, die über die elektronische Baugruppe in den Mantelstromkreis eingekoppelt werden kann. Durch die in den Mantelstromkreis eingekoppelte Wechselspannung wird über die induktive Kopplung ebenfalls die Übertragungsimpedanz der Elektroenergieübertragungseinrichtung beeinflusst. Ferner kann die aus dem Phasenleiter abgegriffene Wechselspannung in vorteilhafter Weise zur Steuerung von Leistungshalbleitern verwendet werden.

Bei einer vorteilhaften Weiterbildung ist die elektronische Baugruppe mit dem Mantelstromkreis galvanisch verbunden. Durch eine galvanische Verbindung ist die Steuerung der Übertragungsimpedanz in einfacher Weise möglich.

In einer anderen Ausführungsform ist die elektronische Baugruppe mit dem Mantelstromkreis induktiv gekoppelt. Die induktive Kopplung der elektronischen Baugruppe mit dem Mantelleiter ermöglicht eine präzise Steuerung mit feiner Abstufung.

Bei einer zweckmäßigen Weiterbildung ist die elektronische Baugruppe mit einer Primärwicklung eines ersten Transformators galvanisch verbunden und eine Sekundärwicklung des ersten Transformators mit dem Mantelstromkreis galvanisch verbunden. Eine solche Ausführung dient zu einer aktiven Spannungseinkopplung. Über den ersten Transformator kann eine Wechselspannung in Abhängigkeit der Ausgestaltung des Transformators mit oder ohne Phasendrehung in den Mantelstromkreis einkoppelt werden. Eine derartige Einkopplung ermöglicht eine präzise und fein abgestufte Steuerung der Impedanz des Mantelstromkreises und damit der Übertragungsimpedanz der Elektroenergieübertragungseinrichtung.

In einer bevorzugten Ausführungsform umfasst die elektronische Baugruppe netzgesteuerte Leistungshalbleiter. Die Verwendung netzgesteuerter Leistungshalbleiter bietet eine kostengünstige Möglichkeit zur Steuerung des Mantelstromes und der Übertragungsimpedanz der Elektroenergieübertragungseinrichtung.

In einer besonders bevorzugten Ausführungsform umfasst die elektronische Baugruppe einen parallel zu einem Parallelzweig angeordneten Kondensator, wobei der Parallelzweig eine Reihenschaltung aus zwei parallelen gegensinnig geschalteten Thyristoren und einer Spule umfasst. Eine derartige Anordnung wird auch als "Thyristor Controlled Series Capacitor" (TCSC) bezeichnet. Ein TCSC ist kostengünstig und arbeitet verlustarm. Mit dem TCSC lässt sich die Impedanz in Abhängigkeit von einem Phasenwinkel, der zur Ansteuerung der Thyristoren verwendet wird, sowohl im induktiven Bereich als auch im kapazitiven Bereich einstellen. Dadurch wird folglich die Steuerung der Übertragungsimpedanz sehr flexibel, insbesondere wenn eine Erhöhung der Übertragungsimpedanz zur Steuerung des Lastflusses erforderlich ist.

In weiterer Ausgestaltung ist dem Parallelzweig ein Schaltelement parallel geschaltet. Die Verwendung von Schaltelementen, beispielsweise Vakuumschaltern oder sonstigen Leistungsschalter, dient zum Schutz der kostenintensiven Leistungshalbleiter.

In zweckmäßiger Weiterbildung kann die elektronische Baugruppe in Reihe zu einer steuerbaren Spule geschaltet sein. Eine steuerbare Spule ergibt weitere Möglichkeiten zur Beeinflussung der Übertragungsimpedanz der Elektroenergieübertragungseinrichtung.

In einer bevorzugten Ausführungsform weist die elektronische Baugruppe eine Kurzkupplung auf. Durch die Kurzkupplung kann eine zweckmäßig erzeugte Wechselspannung in den Mantelstromkreis eingekoppelt werden. Dadurch wird eine präzise und fein abgestufte Steuerung des Stromes im Mantelstromkreis und damit der Übertragungsimpedanz der Elektroenergieübertragungseinrichtung erreicht.

In einer weiteren Ausgestaltung umfasst die Kurzkupplung Umrichter mit selbstgesteuerten Leistungshalbleiter. Die Verwendung von selbstgesteuerten Leistungshalbleiter ermöglicht ein An- und Abschalten der Leistungshalbleiter im MHz-Takt. Auf diese Weise sind Wechselspannungen mit beliebiger Phasenlage und Amplitude erzeugbar, so dass eine Steuerung des Mantelstromes und damit die Steuerung der Übertragungsimpedanz der Elektroenergieverteilungsanlage bei veränderten Übertragungsanforderungen, wie beispielsweise Pendelungen im Netzwerk, schnell und fein abgestuft erfolgen kann.

Vorteilhafterweise umfasst die Kurzkupplung einen ersten Umrichter, der wechselspannungsseitig mit dem ersten Transformator verbunden ist und einen zweiten Umrichter, der gleichspannungsseitig mit dem ersten Umrichter und wechselspannungsseitig mit dem zweiten Transformator verbunden ist. Bei einer solchen Ausbildung kann der zweite Umrichter mit verlustarmen netzgesteuerten Leistungshalbleitern wie Thyristoren ausgebildet sein. Dies ist vorteilhaft, da dadurch die Kosten der Anlage reduziert werden.

Des Weiteren kann die elektronische Baugruppe eine Stromrichterbaugruppe mit einem Umrichter und einem gleichspannungsseitig mit dem Umrichter verbundenen Kondensator aufweisen. Der Kondensator bei einer solchen Stromrichterbaugruppe wirkt als Energiespeicher für die selbstgesteuerten Leistüngshalbleiter des Umrichters. Bei der Verwendung einer solchen Stromrichterbaugruppe kann also ein Umrichter aus der im Kondensator gespeicherten Energie eine Wechselspannung erzeugen und in den Mantelstromkreis einkoppeln. Damit ist eine Beeinflussung des Stromes im Mantelstromkreis und infolge dessen der Übertragungsimpedanz der Elektroenergieübertragungseinrichtung in einem großen Bereich möglich, so dass die Übertragungsimpedanz abhängig von den jeweiligen Anforderungen flexibel gesteuert werden kann. Insbesondere zur Dämpfung der erwähnten Pendelungen im Netz erweist sich die Verwendung von derartigen Baugruppen als besonders vorteilhaft, da sie eine rasche Steuerung ermöglichen.

In weiterer Ausgestaltung der Erfindung sind eine erste elektronische Baugruppe am ersten Ende des Mantelleiters und eine zweite elektronische Baugruppe am zweiten Ende des Mantelleiters vorgesehen sind.

In einer bevorzugten Ausführungsform ist die Elektroenergieübertragungseinrichtung eine gasisolierte Leitung. Bei einer gasisolierten Leitung sind die Phasenleiter von den gasdichten Mantelleitern koaxial umgeben. Dadurch ist insbesondere eine gute induktive Kopplung zwischen Mantelleiter und Phasenleiter gewährleistet, so dass bei der erfindungsgemäßen Anordnung von elektronischen Baugruppen im Mantelstromkreis eine Steuerung der Übertragungsimpedanz leicht möglich ist.

Bei einer hiervon abweichenden Ausgestaltung ist die Elektroenergieübertragungseinrichtung ein Kabel. Bei einem solchen Kabel ist der Phasenleiter von einem druckfesten Rohr umgeben, welches als Mantelleiter dient. Die induktive Kopplung zwischen Phasenleiter und rohrförmigem Mantelleiter kann für die erfindungsgemäße Anordnung von elektronischen Baugruppen im Mantelstromkreis zur Steuerung der Übertragungsimpedanz genutzt werden.

Die Erfindung wird im Folgenden anhand von Ausführungsbeispielen mit Bezug auf Figuren der Zeichnung beschrieben. Es zeigen:
- Figur 1: eine schematische Darstellung einer gasisolierten Leitung mit elektronischen Baugruppen im Mantelstromkreis;
- Figur 2: eine elektronische Baugruppe zur Verwendung im Mantelstromkreis einer gasisolierten Leitung;
- Figur 3: das Impedanzverhalten der elektronischen Baugruppe aus Figur 2;
- Figur 4: eine gasisolierte Leitung mit einer anderen elektronischen Baugruppen im Mantelstromkreis;
- Figur 5: eine gasisolierte Leitung mit einer weiteren elektronischen Baugruppe im Mantelstromkreis.

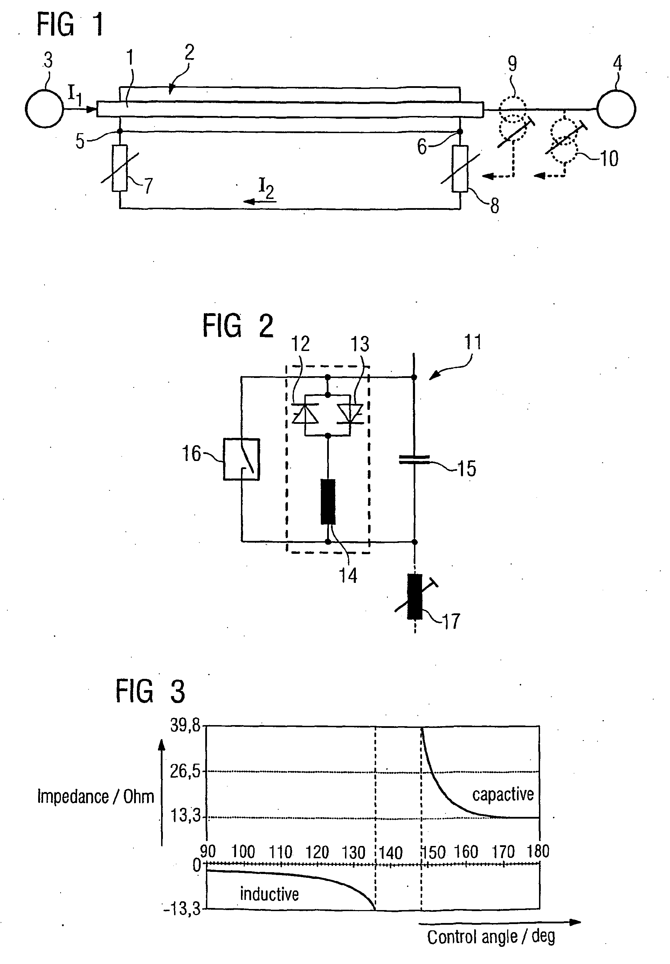

Figur 1 zeigt eine schematische Ansicht einer gasisolierten Leitung. Die gasisolierte Leitung weist einen rohrförmigen Phasenleiter 1 sowie einen Mantelleiter 2 auf, welcher den Phasenleiter 1 gasdicht umgibt. Eingangsseitig ist der Phasenleiter 1 mit einem Elektroenergienetz 3 verbunden. Ausgangsseitig ist der Phasenleiter 1 mit einem Abnehmer 4 oder einer Last verbunden. Über den Phasenleiter 1 ist ein Energiefluss von dem Elektroenergienetz 3 zum Abnehmer 4 ermöglicht. Die Enden 5 und 6 des Mantelleiters 2 sind über Blindwiderstände 7 und 8 zu einem geschlossenen Mantelstromkreis verbunden. Die Blindwiderstände 7 und 8 können Kondensatoren, Spulen oder elektronische Baugruppen sein. In der Figur 1 sind zwei Transformatoren 9 und 10 strichpunktiert dargestellt, die jeweils optional in der Anordnung vorgesehen sein können.

Ein im Phasenleiter 1 fließender Wechselstrom I₁ induziert im Mantelstromkreis eine Spannung, welche einen so genannten Mantelstrom I₂ bewirkt. Der Blindwiderstand 8 ist eine elektronische Baugruppe, die eine veränderbare Impedanz aufweist. Durch diese elektronische Baugruppe 8 kann der Mantelstrom I₂ in Betrag und Phasenlage geändert werden. Dadurch wird wiederum über Induktionserscheinungen die Impedanz für den Leiterstrom I₁ beeinflusst. Eine Änderung der Impedanz der elektronischen Baugruppe 8 kann somit verwendet werden, um das Übertragungsverhalten des Phasenleiters 1 zu steuern und damit eine Übertragungsimpedanz der gasisolierten Leitung zu verändern. Bei Verwendung eines der Transformatoren 9 oder 10 wird zusätzlich aus dem Hauptleiter eine Wechselspannung in den Mantelstromkreis eingekoppelt. Die Primärseite der Transformatoren 9 oder 10 ist entweder galvanisch oder induktiv mit dem Phasenleiter 1 verbunden. Eine Sekundärseite des jeweiligen verwendeten Transformators 9 oder 10 ist galvanisch oder induktiv mit der elektronischen Baugruppe 8 verbunden, über die die im Transformator 9,10 erzeugte Spannung in den Mantelstromkreis eingekoppelt wird. Die Transformatoren dienen zum Abgreifen einer Spannung aus dem Phasenleiter, welche über die elektronische Baugruppe in den Mantelstromkreis eingekoppelt wird. Die Einkopplung dieser Spannung bewirkt eine Änderung des Mantelstroms I₂ und führt über die induktive Kopplung von Mantelstromkreis und Phasenleiter zu einer Beeinflussung der Übertragungsimpedanz der gasisolierten Leitung, so dass die Übertragungsimpedanz der Elektroenergieübertragungseinrichtung beliebig variiert werden kann.

Figur 2 zeigt eine schematische Schaltungsanordnung einer elektronischen Baugruppe 11, die als Blindwiderstand 8 der Figur 1 verwendbar ist. Die elektronische Baugruppe 11 ist hier ein so genannter netzgeführter Thyristor Controlled Series Capacitor (TCSC). Im TCSC 11 sind gegensinnig schaltbare Thyristoren 12,13 mit einer ersten Spule 14 unter Ausbildung eines Parallelzweiges in Reihe verbunden und einem Kondensator 15 sowie einem mechanischen Schaltelement 16 parallel geschaltet. Eine weitere steuerbare Spule 17 ist optional vorsehbar. Die Anordnung aus Figur 2 ist als elektronische Baugruppe 8 in der Figur 1 vorgesehen.

Figur 3 zeigt das Impedanzverhalten der elektronischen Baugruppe 11 aus Figur 2 als Funktion eines Phasenwinkels, der den Zeitpunkt des Zündens der Thyristoren bezüglich der Wechselspannung des Phasenleiters bestimmt. Bei einer Ansteuerung der Thyristoren 12, 13 mit einem Phasenwinkel zwischen 90 und etwa 135° weist die elektronische Baugruppe 11 ein induktives Impedanzverhalten auf. Findet die Ansteuerung unter einem Winkel zwischen etwa 145 und 180° statt, so ist das Verhalten der elektronischen Baugruppe 11 kapazitiv. Die Verwendung einer solchen elektronischen Baugruppe 11 im Mantelstromkreis ermöglicht damit eine Steuerung der Impedanz vom induktiven in den kapazitiven Bereich als Funktion des Phasenwinkels.

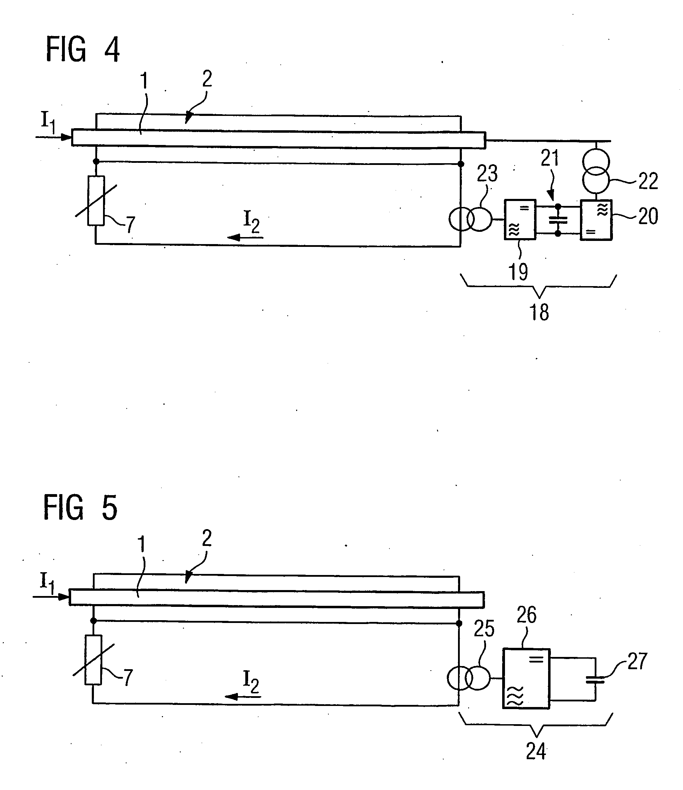

Figur 4 zeigt ein weiteres Ausführungsbeispiel einer erfindungsgemäßen Energieübertragungseinrichtung. Der Blindwiderstand 8 aus Figur 1 ist dabei durch eine als solche bekannte Kurzkupplung 18 gebildet. Die Kurzkupplung 18 weist zwei Umrichter 19 und 20 auf, die gleichspannungsseitig über eine Leitungsanordnung 21 miteinander verbunden sind. Die jeweilige Wechselspannungsseite der Umrichter 19 bzw. 20 ist über Transformatoren 22 bzw. 23 mit dem Phasenleiter 1 bzw. dem Mantelstromkreis verbunden. Über den Transformator 22 induziert der Phasenleiter 1 eine Wechselspannung, die von dem ersten Umrichter 20 in eine Gleichspannung umgewandelt wird. Die erzeugte Gleichspannung liegt am zweiten Umrichter 19 an, der die Gleichspannung in eine Wechselspannung mit gewünschtem Betrag und Phasenlage zur Wechselspannung des Mantelstromkreises umwandelt. Über den Transformator 23 wird die Wechselspannung schließlich in den Mantelstromkreis eingekoppelt.

In Figur 5 dargestellt ist eine weitere Ausführungsform einer gasisolierten Leitung, bei der der Blindwiderstand 8 aus Figur 1 durch eine Stromrichterbaugruppe 24 gebildet wird, die über einen Transformator 25 induktiv mit dem Mantelleiter verbundenen ist. Die Stromrichterbaugruppe 24 verfügt über einen Umrichter 26, der auf seiner Gleichspannungsseite einen Kondensator 27 zur Energiespeisung aufweist. Die Stromrichterbaugruppe 24 dient zur Steuerung des Mantelstroms I2 im Mantelstromkreis und damit zur Beeinflussung der Übertragungsimpedanz der gasisolierten Leitung. Die Stromrichterbaugruppe 24 in dieser Ausführungsform ist entweder ein als solcher bekannter so genannter Static Var Compensator oder ein als solcher ebenfalls bekannter so genannter Static Synchronous Compensator.

### Bezugszeichenliste

- 1: Phasenleiter
- 2: Mantelleiter
- 3: Elektroenergienetz
- 4: Abnehmer
- 5,6: Enden
- 7,8: Blindwiderstände
- 9,10: Transformatoren
- 11: TCSC
- 12,13: Thyristoren
- 14: Spule
- 15: Kondensator
- 16: Schaltelement
- 17: Spule
- 18: Netzkupplung
- 19,20: Umrichterstationen
- 21: Leitungsanordnung
- 22,23: Transformatoren
- 24: Stromrichterbaugruppe
- 25: Transformator
- 26: Umrichter
- 27: Kondensator

## Patentansprüche

1. Elektroenergieübertragungseinrichtung mit Wechselstrom führenden und eine Übertragungsimpedanz aufweisenden Phasenleitern (1) und Mantelleitern (2), die mit den Phasenleitern (1) induktiv gekoppelt sind, wobei ein erstes Ende (5) und ein zweites Ende (6) jedes Mantelleiters (2) mit einem Widerstand einen Mantelstromkreis ausbilden und eine elektronische Baugruppe (8,11,18,24) zur Änderung der Impedanz des Mantelstromkreises vorgesehen ist, wobei
die elektronische Baugruppe (8,11,18,24) auch zur Erhöhung der Übertragungsimpedanz eingerichtet ist,
**dadurch gekennzeichnet, dass** der Widerstand ein Blindwiderstand (7) ist,
die elektronische Baugruppe (8,11,18,24) den Blindwiderstand (7) umfasst, und eine Primärseite eines Transformators (9,10,22) mit dem Phasenleiter verbunden ist und die Sekundärseite des Transformators (9,10,22) mit der elektronischen Baugruppe (8,11,18,24) verbunden ist.

2. Elektroenergieübertragungseinrichtung nach Anspruch 1,
**dadurch gekennzeichnet, dass**
die elektronische Baugruppe (8,11,18,24) mit dem Mantelstromkreis galvanisch verbunden ist.

3. Elektroenergieübertragungseinrichtung nach Anspruch 1,
**dadurch gekennzeichnet, dass**
die elektronische Baugruppe (8,11,18,24) mit dem Mantelstromkreis induktiv gekoppelt ist.

4. Elektroenergieübertragungseinrichtung nach Anspruch 3,
**dadurch gekennzeichnet, dass**
die elektronische Baugruppe (8,11,18,24) mit einer Primärwicklung eines ersten Transformators (23,25) galvanisch verbunden ist und eine Sekundärwicklung des ersten Transformators (23,25) mit dem Mantelstromkreis galvanisch verbunden ist.

5. Elektroenergieübertragungseinrichtung nach Anspruch 1,
**dadurch gekennzeichnet, dass**
die elektronische Baugruppe (8,11,18,24) netzgesteuerte Leistungshalbleiter umfasst.

6. Elektroenergieübertragungseinrichtung nach Anspruch 5,
**dadurch gekennzeichnet, dass**
die elektronische Baugruppe (11) einen parallel zu einem Parallelzweig angeordneten Kondensator (15) aufweist, wobei der Parallelzweig eine Reihenschaltung aus zwei parallelen gegensinnig geschalteten Thyristoren (12,13) und einer Spule (14) umfasst.

7. Elektroenergieübertragungseinrichtung nach Anspruch 6,
**dadurch gekennzeichnet, dass**
dem Parallelzweig ein Schaltelement (16) parallel geschaltet ist.

8. Elektroenergieübertragungseinrichtung nach Anspruch 6 oder 7,
**dadurch gekennzeichnet, dass**
die elektronische Baugruppe (11) in Reihe zu einer steuerbaren Spule (17) geschaltet ist.

9. Elektroenergieübertragungseinrichtung nach einem der vorhergehenden Ansprüche,
**dadurch gekennzeichnet, dass**
die elektronische Baugruppe (8,11,18,24) eine Kurzkupplung (18) aufweist.

10. Elektroenergieübertragungseinrichtung nach Anspruch 9,
**dadurch gekennzeichnet, dass**
die Kurzkupplung (18) Umrichter (19,20) mit selbstgesteuerten Leistungshalbleiter umfassen.

11. Elektroenergieübertragungseinrichtung nach Anspruch 10,
**dadurch gekennzeichnet, dass**
die Kurzkupplung (18) einen ersten Umrichter (19), der wechselspannungsseitig mit dem ersten Transformator (23) verbunden ist und einen zweiten Umrichter (20), der gleichspannungsseitig mit dem ersten Umrichter (19) und wechselspannungsseitig mit dem zweiten Transformator (22) verbunden ist, umfasst.

12. Elektroenergieübertragungseinrichtung nach einem der Ansprüche 1 bis 8,
**dadurch gekennzeichnet, dass**
die elektronische Baugruppe (8,11,18,24) eine Stromrichterbaugruppe (24) mit einem Umrichter (26) und einem gleichspannungsseitig mit dem Umrichter (26) verbundenen Kondensator (27) aufweist.

13. Elektroenergieübertragungseinrichtung nach einem der vorhergehenden Ansprüche,
**dadurch gekennzeichnet, dass**
eine erste elektronische Baugruppe (8,11,18,24) am ersten Ende (5) des Mantelleiters (2) und eine zweite elektronische Baugruppe (8,11,18,24) am zweiten Ende des Mantelleiters (2) vorgesehen sind.

14. Elektroenergieübertragungseinrichtung nach einem der vorhergehenden Ansprüche,
**dadurch gekennzeichnet, dass**
die Elektroenergieübertragungseinrichtung eine gasisolierte Leitung ist.

15. Elektroenergieübertragungseinrichtung nach einem der vorhergehenden Ansprüche,
**dadurch gekennzeichnet, dass**
die Elektroenergieübertragungseinrichtung ein Kabel ist.

## Claims

1. Electrical power transmission device having phase conductors (1) which carry alternating current and have a transmission impedance, and having casing conductors (2) which are inductively coupled to the phase conductors (1), with a first end (5) and a second end (6) of each casing conductor (2) together with a reactance component forming a casing circuit, and with an electronic assembly (8, 11, 18, 24) being provided in order to vary the impedance of the casing circuit, with the electronic assembly (8, 11, 18, 24) being also designed to increase the transmission impedance, **characterized in that** the reactance component is a reactance (7), the electronic assembly (8, 11, 18, 24) comprises the reactance (7), and a primary of a transformer (9, 10, 22) is connected to the phase conductor, and the secondary of the transformer (9, 10, 22) is connected to the electronic assembly (8, 11, 18, 24).

2. Electrical power transmission device according to Claim 1, **characterized in that** the electronic assembly (8, 11, 18, 24) is galvanically connected to the casing circuit.

3. Electrical power transmission device according to Claim 1, **characterized in that** the electronic assembly (8, 11, 18, 24) is inductively coupled to the casing circuit.

4. Electrical power transmission device according to Claim 3, **characterized in that** the electronic assembly (8, 11, 18, 24) is galvanically connected to a primary winding of a first transformer (23, 25), and a secondary winding of the first transformer (23, 25) is galvanically connected to the casing circuit.

5. Electrical power transmission device according to Claim 1, **characterized in that** the electronic assembly (8, 11, 18, 24) comprises mains-commutated power semiconductors.

6. Electrical power transmission device according to Claim 5, **characterized in that** the electronic assembly (11) has a capacitor (15) arranged in parallel with a parallel branch, with the parallel branch comprising a series circuit formed from two thyristors (12, 13), connected back-to-back in parallel, and a coil (14).

7. Electrical power transmission device according to Claim 6, **characterized in that** a switching element (16) is connected in parallel with the parallel branch.

8. Electrical power transmission device according to Claim 6 or 7, **characterized in that** the electronic assembly (11) is connected in series with a controllable coil (17).

9. Electrical power transmission device according to one of the preceding claims, **characterized in that** the electronic assembly (8, 11, 18, 24) has a back-to-back link (18).

10. Electrical power transmission device according to Claim 9, **characterized in that** the back-to-back link (18) comprises converters (19, 20) with self-commutated power semiconductors.

11. Electrical power transmission device according to Claim 10, **characterized in that** the back-to-back link (18) comprises a first converter (19), which is connected on the AC voltage side to the first transformer (23), and a second converter (20), which is connected on the DC voltage side to the first converter (19) and on the AC voltage side to the second transformer (22).

12. Electrical power transmission device according to one of Claims 1 to 8, **characterized in that** the electronic assembly (8, 11, 18, 24) has a converter assembly (24) with a converter (26) and a capacitor (27), which is connected on the DC voltage side to the converter (26).

13. Electrical power transmission device according to one of the preceding claims, **characterized in that** a first electronic assembly (8, 11, 18, 24) is provided at the first end (5) of the casing conductor (2), and a second electronic assembly (8, 11, 18, 24) is provided at the second end of the casing conductor (2).

14. Electrical power transmission device according to one of the preceding claims, **characterized in that** the electrical power transmission device is a gas-insulated line.

15. Electrical power transmission device according to one of the preceding claims, **characterized in that** the electrical power transmission device is a cable.

## Revendications

1. Dispositif de transfert d'énergie électrique, comprenant des conducteurs (1) de phase conduisant du courant alternatif ayant une impédance de transfert et des conducteurs de gaine, qui sont couplés inductivement aux conducteurs ( 1 ) de phase, une première extrémité ( 5 ) et une seconde extrémité ( 6 ) de chaque conducteur ( 2 ) de gaine formant avec une résistance un circuit de gaine et il est prévu un module ( 8, 11, 18, 24 ) électronique pour la modification de l'impédance du circuit de gaine, dans lequel
le module ( 8, 11, 18, 24 ) électronique est conçu aussi pour augmenter l'impédance de transfert,
**caractérisé en ce que**
la résistance est une réactance ( 7 ), le module ( 8, 11, 18, 24 ) électronique comprend la réactance ( 7 ), et un côté primaire d'un transformateur ( 9, 10, 22 ) est relié au conducteur de phase, et le côté secondaire du transformateur ( 9, 10, 22 ) est relié au module ( 8, 11, 15, 24 ) électronique.

2. Dispositif de transfert d'énergie électrique suivant la revendication 1,
**caractérisé en ce que**
le module ( 8, 11, 18, 24 ) électronique est relié galvaniquement au circuit de gaine.

3. Dispositif de transfert d'énergie électrique suivant la revendication 1,
**caractérisé en ce que**
le module ( 8, 11, 18, 24 ) électronique est couplé inductivement au circuit de gaine.

4. Dispositif de transfert d'énergie électrique suivant la revendication 3,
**caractérisé en ce que**
le module ( 8, 11, 18, 24 ) électronique est relié galvaniquement à un enroulement primaire d'un premier transformateur ( 23, 25 ) et un enroulement secondaire du premier transformateur ( 23, 25 ) est relié galvaniquement au circuit de gaine.

5. Dispositif de transfert d'énergie électrique suivant la revendication 1,
**caractérisé en ce que**
le module ( 8, 11, 18, 24 ) électronique comprend des semiconducteurs de puissance commandés par le réseau.

6. Dispositif de transfert d'énergie électrique suivant la revendication 5,
**caractérisé en ce que**
le module ( 11 ) électronique a un condensateur ( 15 ) monté en parallèle à une branche parallèle, la branche parallèle comprenant un circuit série composé de deux thyristors ( 12, 13 ) montés en parallèle en sens opposé et une bobine ( 14 ).

7. Dispositif de transfert d'énergie électrique suivant la revendication 6,
**caractérisé en ce que**
un élément ( 16 ) de commutation est monté en parallèle à la branche parallèle.

8. Dispositif de transfert d'énergie électrique suivant la revendication 6 ou 7,
**caractérisé en ce que**
le module ( 11 ) électronique est monté en série avec une bobine ( 17 ) pouvant être commandée.

9. Dispositif de transfert d'énergie électrique suivant l'une des revendications précédentes,
**caractérisé en ce que**
le module ( 8, 11, 18, 24 ) électronique a un couplage ( 18 ) court.

10. Dispositif de transfert d'énergie électrique suivant la revendication 9,
**caractérisé en ce que**
le couplage ( 18 ) court comprend des convertisseurs ( 19, 20 ) de fréquence ayant des semiconducteurs de puissance à commande automatique.

11. Dispositif de transfert d'énergie électrique suivant la revendication 10,
**caractérisé en ce que**
le couplage ( 18 ) court comprend un premier convertisseur ( 19 ) de fréquence, qui est relié du côté de la tension alternative au premier transformateur ( 23 ), et un deuxième convertisseur ( 20 ) de fréquence, qui est relié du côté de la tension continue au premier convertisseur ( 19 ) de fréquence et du côté de la tension alternative au deuxième transformateur ( 22 ).

12. Dispositif de transfert d'énergie électrique suivant l'une des revendications 1 à 8,
**caractérisé en ce que**
le module ( 8, 11, 18, 24 ) électronique a un module ( 24 ) de convertisseur statique ayant un convertisseur ( 26 ) de fréquence et un condensateur ( 27 ) relié au convertisseur ( 26 ) de fréquence du côté de la tension continue.

13. Dispositif de transfert d'énergie électrique suivant l'une des revendications précédentes,
**caractérisé en ce que**
un premier module ( 8, 11, 18, 24 ) électronique est prévu à la première extrémité ( 5 ) du conducteur ( 2 ) de gaine et un second module ( 8, 11, 18, 24 ) électronique à la seconde extrémité du conducteur ( 2 ) de gaine.

14. Dispositif de transfert d'énergie électrique suivant l'une des revendications précédentes,
**caractérisé en ce que**
le dispositif de transfert d'énergie électrique est une ligne isolée par du gaz.

15. Dispositif de transfert d'énergie électrique suivant l'une des revendications précédentes,
**caractérisé en ce que**
le dispositif de transfert d'énergie électrique est un câble.
